# EUROPEAN PATENT APPLICATION

(11) **EP 4 834 769 A1**
(43) Date of publication of application: **04.11.2026**
(21) Application number: 26175014.5
(22) Date of filing: 28.04.2026
(51) Int. Cl.: B64D 37/04, B64C 7/00, B64D 29/00, B64D 37/16, B64D 37/20, B64D 37/30

(54) **AIRCRAFT FUEL SYSTEM**

(30) Priority: 29.04.2025 GB 202506509
(71) Applicant: Airbus Operations Ltd, Filton, Bristol BS34 7PA (GB)
(72) Inventor: EDWARDS, Henry, Filton, Bristol, BS34 7PA (GB)
(74) Representative: EIP

(57) **Abstract**

Disclosed is an aircraft fuel system. The aircraft fuel system comprises a first tank disposed within an interior of an aircraft, the first tank fluidically connected to a fuel-consuming component by a fuel line, and a second tank located on an exterior of the aircraft, the second tank fluidically connected to the fuel line at an injection position along the fuel line between the first tank and the fuel-consuming component. The aircraft fuel system is configured such that contents of the second tank is selectively releasable into the fuel line. An aircraft comprising the aircraft fuel system, and a method of operating an aircraft, are also disclosed.

## Description

### TECHNICAL FIELD

The present disclosure relates to aircraft fuel systems.

### BACKGROUND

Aircraft comprise fuel systems to store and utilise aircraft fuel. Use of aircraft fuel can produce unwanted emissions into the atmosphere, however. It is desirable to improve aircraft fuel systems to facilitate a reduction in unwanted emissions.

### SUMMARY

A first aspect of the present disclosure provides an aircraft fuel system comprising a first tank and a second tank. The first tank is disposed within an interior of an aircraft, and is fluidically connected to a fuel-consuming component by a fuel line. The second tank is located on an exterior of the aircraft, and is fluidically connected to the fuel line at an injection position along the fuel line between the first tank and the fuel-consuming component. The aircraft fuel system is configured such that contents of the second tank is selectively releasable into the fuel line.

The first tank can be filled with aircraft fuel. The second tank can be filled with aircraft fuel additive. The contents of the second tank can thereby be different to the first tank. The aircraft fuel system is thereby capable of multi-fuel operation, in which the fuel-consuming component can be provided with different fuels based on the contents of the first tank and the second tank. Contents of the second tank can be selectively released into the fuel line for use by the fuel-consuming component. For example, the second tank may store undiluted aircraft fuel additive. When desired, undiluted aircraft fuel additive may be mixed with aircraft fuel being conveyed through the fuel line from the first tank to the fuel-consuming component. Accordingly, at a desired time, for example when the aircraft is being operated on the ground, such as whilst loading, unloading, taxiing, undergoing maintenance, and the like, the fuel-consuming component is provided with, and consumes, the aircraft fuel and fuel additive blend. This can reduce unwanted emissions such as soot, nitrogen oxides, sulphur oxides or other non-CO₂ emissions, for example. At a later time, when use of the contents of the second tank is not required or desired, release of the contents of the second tank into the fuel line can be terminated, and the fuel-consuming component can be provided with the contents of the first tank alone, for example.

By providing the second tank on an exterior of the aircraft, the second tank can make use of otherwise unused space on the aircraft. In particular, this can lend the aircraft fuel system suitable to being retrofit into existing aircraft, since an internal architecture of the aircraft may require no or otherwise reduced modifications in order to install the second tank, compared with a system in which the second tank is provided internally within the aircraft. By arranging the injection location along a fuel line between the first tank and the fuel-consuming component, a degree to which an existing fuel system must be modified to accommodate the second tank is also minimised or otherwise reduced, since the second tank and fuel supply therefrom utilises existing components. Furthermore, by arranging the injection location to be at such an intermediate position along the fuel line, exposure of the fuel system to the contents of the second tank can be reduced. For example, the first tank does not receive the contents of the second tank. This can be useful in case contents of the second tank were to have a detrimental impact on the first tank.

An "aircraft fuel", as used herein, refers to a conventional aviation fuel such as Jet A or Jet A1 fuels, which are generally hydrocarbon-based, and in particular kerosene-based, fuels. An "aircraft fuel additive", as used herein, refers to a substance added to an aircraft fuel for purposes such as reduced unwanted emissions. The aircraft fuel additives described herein can also encompass icing inhibitors, corrosion inhibitors, metal deactivators, static dissipator additives and biocides, for example. The aircraft fuel additive may be stored in the second tank in a concentrated, undiluted, or unblended form. The structure may alternatively store aircraft fuel additive in a blended form, wherein the aircraft fuel additive is blended with aircraft fuel. The resulting mixture of aircraft fuel additive with aircraft fuel may be referred to herein simply as "additive-fuel blend" for brevity. Furthermore, reference to the "fuel additive" should be understood to refer to either unblended or blended forms, unless specified otherwise. For example, the structure storing fuel additive can mean that an additive-fuel blend is being stored, or undiluted fuel additive is being stored. The second tank may store an alternative type of aircraft fuel, such as an SAF. An "SAF" refers to a synthetic, or sustainable, aviation fuel, which are alternative forms of aircraft fuel which can be e.g. non-petroleum based and designed to function in place of conventional aircraft fuel. These can be derived from biomass, for example. The SAF may be mixed with fuel additives.

A "fuel tank", as used herein, refers to a storage volume for storing aircraft fuel. The first tank can, accordingly, be considered a fuel tank. The second tank store undiluted aircraft fuel additive, and may not store aircraft fuel per se. However, in examples where the second tank stores aircraft fuel (such as by storing an additive-fuel blend), the second tank may also be considered a fuel tank. A "fuel conduit", as used herein, refers to elements of a fuel line which are operable to convey fuel from the fuel tank to the fuel-consuming component, such as fuel pipes. The fuel line from the first tank to the fuel-consuming component is anticipated to comprise one or more fuel conduits; where present, feed lines, refill lines, and the like are also anticipated to comprise fuel (or more generally fluid) conduits. A "fuel-consuming component", as used herein, refers to a component which utilises fuel by combustion to generate mechanical or electrical power, for example. It will be appreciated that a "fuel-consuming component" refers to a component configured to consume fuel, and "fuel-consuming component" does not necessitate the component to be in a state of consuming fuel. The fuel-consuming component may be an auxiliary power unit, for example, which is operable to generate energy for operations other than propulsion, for example. The fuel-consuming component may be a jet engine of the aircraft. It will be appreciated that the aircraft fuel system may comprise a fuel line which is configured to fluidically connect multiple fuel tank to multiple fuel-consuming components.

Optionally, the second tank is connected to the fuel line by a feed line, the feed line extending from the second tank and joining the fuel line at the injection position along the fuel line between the first tank and the fuel-consuming component. In this way, the second tank can be positioned at some distance away from the fuel line, such as at an otherwise unutilised space on the aircraft. The feed line comprises one or more fuel conduits which convey fuel from the position of the second tank to the injection position. In other examples, the second tank interfaces directly with the injection position along the fuel line, and is absent any substantial length of fuel conduits for connecting the second tank to the fuel line at the injection location, for example.

Optionally, the aircraft fuel system being configured such that contents of the second tank is selectively releasable into the fuel line means that the aircraft fuel system is configured to, in a switchable manner, prevent flow of fuel from the first tank whilst permitting flow from the second tank to the fuel-consuming component. This may be controlled by a piping manifold at the injection position, for example, or some other means of controlling multiple inputs (from the first and second tank, respectively) to a common output (to the fuel-consuming component), such as controlling respective valves at the first and second tank themselves. In some examples, contents of the second tank is released whilst there is a flow from the first tank to the fuel-consuming component, such that the contents of the second tank mixes with contents of the first tank. For example, where the second tank contains undiluted aircraft-fuel additive, this may be injected into the fuel from the first tank at the injection position. In examples where the second tank contains an additive-fuel blend, flow from the first tank may be stopped altogether as described above whilst the additive-fuel blend from the second tank is released into the fuel line at the injection position and provided to the fuel-consuming component. Accordingly, it will be understood that "injection position" refers to a point in the fuel line at which the second tank is fluidically connected into the fuel line, and that flow from the first tank through the fuel line is not necessarily required for contents of the second tank to be provided to the fuel-consuming component.

Optionally, the aircraft fuel system comprises a first refill port for the first tank, and a second refill port, separate from the first refill port, for the second tank. This can allow the first tank and the second tank to be refilled independently from one another. Since the first tank and the second tank may be filled independently, they may be refilled concurrently; this can reduce an overall time taken to fill the first and second tank. Furthermore, since the second tank may be filled with a different contents than the first tank, each refill port may be specific to a respective content of each tank. Each refill port is an externally-accessible structure which can interface with a respective source system (e.g. some fuel source for providing fuel to the first tank via the first refill port, for example). A source system can be considered to be an external supply of contents of the respective tank.

Optionally, the aircraft fuel system comprises a refuel line from the second refill port to the second tank. The second refill port may be located at a distance away from the second tank. The refuel line comprises one or more fuel conduits to convey fuel form the second refill port to the second tank. The presence of a refuel line can allow the second tank to be positioned in a location which is otherwise unutilised, for example, and so presents a desirable position for storage, whereas the second refill port may be positioned at a position which is easier to access for a source system (such as for a technician on the ground, for example).

Optionally, at least a portion of the refuel line forms at least a portion of the feed line. The refuel line and feed line may share common fuel conduit portions, for example. This can reduce a total spatial footprint of the fuel system compared with having separate refuel line and feed lines, for example.

Optionally, the second refill port is located in a housing of the second tank. This can minimise or otherwise reduce a distance between the second refill port and the second tank. In some examples, the second refill port may interface directly with an interior volume of the second tank.

Optionally, the second refill port is located on an underside of the aircraft. By positioning the second refill port on the underside of the aircraft, the second refill port may be more easily accessible to a source system on the ground. An underside of the aircraft may be considered to be a surface at least partially facing the ground when the aircraft is landed.

Optionally, the fuel-consuming component is an engine of the aircraft and the injection position is within a high-pressure fuel pump or high-pressure shut-off valve of the engine. This would minimise or otherwise reduce a distance from the injection position to the fuel-consuming component, reducing exposure of the first tank and the fuel line to the contents of the second tank. This can also allow the contents of the second tank to take effect more quickly due to a lower propagation distance through the fuel line, for example.

Optionally, the fuel-consuming component is an engine of the aircraft and the second tank is disposed at least partially within an engine nacelle of the aircraft. This positions the second tank in close proximity to the fuel-consuming component, reducing a travel time for contents of the second tank to the fuel-consuming component. This can allow a content of the second tank to have a more immediate effect. Furthermore, positioning the second tank on the engine nacelle can render the second tank more accessible from the ground, making refuelling of the second tank easier, for example. In such examples, the second tank may be configured to store undiluted fuel additive, and the injection position may be within a high-pressure fuel pump or high-pressure shut-off valve of the engine.

Optionally, a volume of the second tank is less than 100 litres. This can reduce an aerodynamic impact compared with larger tanks and can mean the second tank is easier to package into the aircraft. In some examples, the volume of the tank is smaller than 10 litres, for example, and in some such examples the tank is configured to store aircraft fuel additive. In some such examples, the volume of the tank is less than 100 litres, such as being less than 10 litres, and is disposed on the engine nacelle.

Optionally, the second tank is disposed on an upper portion of the engine nacelle, proximate a supporting pylon of the engine. This can utilise otherwise unoccupied space and can allow the second tank to be mounted in close proximity to a hard point of the wing.

Optionally, the second tank is disposed on a side portion of the engine nacelle, proximate an engine fuel distribution system. As discussed earlier, this can reduce a distance of the second tank to the engine, and can facilitate more straightforward refuelling due to the easily accessible nature of the engine.

Optionally, the second tank is disposed on the fuselage of the aircraft.

Optionally, a volume of the second tank is between 100 and 1000 litres. This can allow the second tank to store a significant volume of, for example, additive-fuel blend. The second tank can be dimensioned such that it holds a sufficient quantity of fuel additive for performing operations within an associated operational time frame. For example, the associated operational time frame may relate to an anticipated duration for which the aircraft will be operated on the ground. The second tank may therefore store enough additive-fuel blend for the fuel-consuming component whilst the aircraft operates on the ground.

Optionally, the second tank is positioned along a centreline of an upper portion of the fuselage. Positioning the second tank centrally can minimise or reduce an impact on handling performance of the aircraft by ensuring a symmetric weight distribution of the stored contents of the second tank relative to the centreline of the aircraft, for example.

Optionally, the second tank is connected to a further fuel-consuming component. In this way, the second tank is operable to provide its contents to more than one fuel-consuming component. The aircraft refuelling system may have independent control over supply to the fuel-consuming component and supply to the further fuel-consuming component.

Optionally, the further fuel-consuming component is an auxiliary power unit of the aircraft. The fuel-consuming component may be an engine of the aircraft. In other examples, the fuel-consuming component is the auxiliary power unit of the aircraft.

Optionally, the fuel-consuming component is the auxiliary power unit of the aircraft and the second tank is configured to store an SAF with fuel additives.

Optionally, the second tank is apportioned into a first sub-storage tank and a second sub-storage tank. The second tank can thereby separately store two different substances.

Optionally, the first sub-storage tank is fluidically connected to the fuel line to the fuel-consuming component, and the second sub-storage tank fluidically connected to the further fuel-consuming component. In this way, the second tank can store, separately but within a common volume, substances for use by the fuel-consuming component and for the further fuel-consuming component.

Optionally, the first sub-storage tank is fluidically connected to the fuel line to the fuel-consuming component, and the second sub-storage tank is fluidically connected to a further fuel line to the fuel-consuming component. In this way, the second tank can store, separately but within a common volume, two different substances for use by the fuel-consuming component. The contents of each sub-storage tank may be independently selectively releasable for use by the fuel-consuming component.

Optionally, the second tank is housed in a fairing. Aerodynamic properties of the aircraft can thereby be improved.

Optionally, the fairing hosts a functional device such as any of: a strake, oil heat exchanger, pitot tube, antenna, oil top-up hardware, or lighting unit. Unutilised space on the fairing can thereby be used for some other purpose, for example.

Optionally, the aircraft fuel system comprises a control unit operable to control release of the contents of the second tank into the fuel line. This may comprise one or more processing devices and one or more sensors, for example, in order to implement some form of control scheme.

Optionally, the first tank of the aircraft fuel system is storing aircraft fuel and the second tank is storing aircraft fuel additive. This can allow the aircraft fuel to be used during a first operational window, and the contents of the second tank, which may comprise undiluted aircraft fuel additive, or an additive-fuel blend, for example, to be used during a second operational window. The first operational window may be a time where the aircraft is airborne and at cruising altitude, for example, whereas the second operational window may be when the aircraft is being operated on the ground, for example.

Optionally, the second tank of the aircraft fuel system is storing undiluted aircraft fuel additive. This can allow the aircraft fuel, stored in the first tank and delivered to the fuel-consuming component by the fuel line, to be mixed with undiluted aircraft fuel additive at the injection position and delivered to the fuel-consuming component with the aircraft fuel additive added. This means that, compared with storing a fuel-additive blend in the second tank, a relatively small volume of liquid can be stored by the second tank whilst the fuel-consuming component receives the benefit of using the fuel-additive blend.

Optionally, the first sub-storage tank of the second tank of the aircraft fuel system is storing aircraft fuel additive and the second sub-storage tank of the second tank of the aircraft fuel system is storing a different substance to the first sub-storage tank. As described previously, the second tank is thereby operable to store different substances in a common volume.

Optionally, the second sub-storage tank is storing a sustainable aviation fuel. The sustainable aviation fuel may be a synthetic paraffinic fuel, for example.

A second aspect of the present disclosure provides an aircraft comprising an aircraft fuel system according to the first aspect. The aircraft is able to utilise multiple types of fuel; a first fuel stored in the first tank, and a second either stored in the second tank or derived from the contents of the second tank (such as undiluted aircraft fuel additive in the second tank being mixed with the first fuel from the first tank).

Optionally, the first tank of the aircraft fuel system of the aircraft is storing aircraft fuel and the second tank is storing aircraft fuel additive.

Optionally, the second tank of the aircraft fuel system of the aircraft is storing undiluted aircraft fuel additive.

Optionally, the first sub-storage tank of the second tank of the aircraft is storing aircraft fuel additive and the second sub-storage tank of the second tank of the aircraft is storing a different substance to the first sub-storage tank.

Optionally, the second sub-storage tank of the second tank of the aircraft is storing a sustainable aviation fuel.

A third aspect of the present disclosure provides a method of operating an aircraft. The method comprises providing, in a first providing, in a first tank, aircraft fuel, the first tank within an interior of the aircraft; providing, in a second tank, aircraft fuel additive, the second tank located on an exterior of the aircraft, contents of the second tank being different to contents of the first tank; and using contents of the second tank by the fuel-consuming component of the aircraft. In accordance with the discussion of the first aspect and the second aspect, the method facilitates multi-fuel operation of the aircraft. The method may further comprise a step of using contents of the first tank without using contents of the second tank, such as where the contents of the second tank is not selectively released into the fuel line. It will be appreciated that the contents of the second tank is different to the contents of the first tank.

Optionally, providing, in the first tank, aircraft fuel, comprises filling the first tank with aircraft fuel via a first refill port associated with the first tank; and providing, in the second tank, aircraft fuel additive, comprises filling the second tank with aircraft fuel additive via a second refill port associated with the second tank, the second refill port separate from the first refill port. As discussed in view of the first aspect, this permits concurrent refilling of each tank, which can reduce an overall time taken to refill each tank.

Optionally, the method may be performed using the aircraft fuel system of the first aspect and/or the aircraft of the first aspect.

Optional features of any one of the aspects of the present disclosure may be applied equally to any other one of the aspects of the present disclosure, where appropriate. In particular, it will be appreciated that description of features of the aircraft fuel system in relation to the first aspect also applies to an aircraft comprising the aircraft fuel system, as per the second aspect. Furthermore, functions described for the features of the first and second aspects can accordingly form part of the method according to the third aspect.

### BRIEF DESCRIPTION OF THE DRAWINGS

Embodiments of the present disclosure will now be described, by way of example only, with reference to the accompanying drawings, in which:
Figure 1 shows a schematic view of an aircraft fuel system according to an example;
Figure 2 shows an aircraft equipped with the aircraft fuel system according to an example;
Figure 3 shows an arrangement of the aircraft fuel system according to an example;
Figure 4 shows an arrangement of the aircraft fuel system according to an example;
Figure 5 shows an arrangement of the aircraft fuel system according to an example;
Figures 6 and 7 show further details of the aircraft fuel system according to examples;
Figures 8 and 9 show an aircraft fuel system according to a further example; and
Figure 10 is a flowchart illustrating steps of a method of operating an aircraft according to an example.

### DETAILED DESCRIPTION

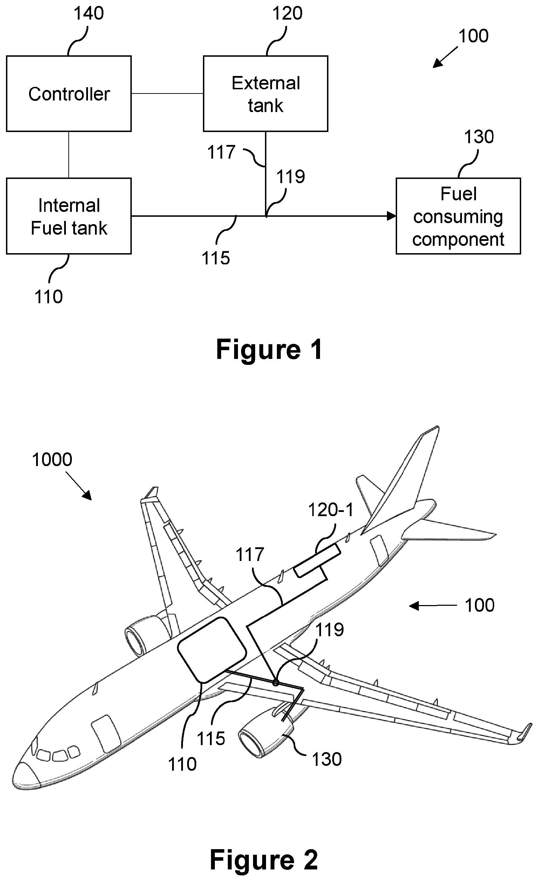

An aircraft fuel system 100 according to the present disclosure is depicted schematically in Figure 1. An aircraft 1000 comprising the aircraft fuel system 100 is depicted in Figure 2. The aircraft fuel system 100 comprises an internal fuel tank 110, an external tank 120, a fuel-consuming component 130, and a controller 140. Exemplary configurations of these will be described hereafter in view of Figures 2-9. The internal fuel tank 110 is fluidically connected to the fuel-consuming component 130 by a fuel line 115. The external tank 115 is fluidically connected to the fuel line 115 by a feed line 117. The feed line 117 joins the fuel line 115 at an injection position 119, at which fluids in the feed line 117 will be introduced into and conveyed by the fuel line 115 to the fuel-consuming component 130.

The internal fuel tank 120 is for storing aircraft fuel within the aircraft 1000. In this the internal fuel tank 120 is within the fuselage of the aircraft 1000, but the skilled person will appreciate that internal fuel tanks can also be found in locations such as the wing, and the present disclosure is not limited to any particular arrangement of the internal fuel tank 120.

The fuel line 115 comprises a fuel conduit, such as a series of one or more fuel pipes, which extends from the internal fuel tank 120 to the fuel-consuming component 130. Again, the skilled person will appreciate that a variety of possible arrangements for the fuel line 115 are possible, and the present disclosure is not limited to any particular form.

The external tank 120 is mounted to an external position of the aircraft 1000. Figure 2 illustrates a first example of the external tank 120-1. The external tank 120 is for storing aircraft fuel additive. The external tank 120 may store undiluted aircraft fuel additive, or a blend of aircraft fuel additive with aircraft fuel. Generally, the external tank 120 is for storing a different substance (i.e. fuel, or fuel additive) compared to the internal fuel tank 110. The external tank 120 is therefore dimensioned to have a suitable volume to store said substance. The volume of the external tank 120 may vary depending on an intended use-case. For example, in examples where the external tank 120 is for storing undiluted aircraft fuel additive, the external tank may be less than 100 litres in volume. In examples where the external tank 120 is for storing a pre-mixed blend of aircraft fuel and additive, the external tank 120 may have a volume such as 500 litres. The volume of the external tank 120 may vary between examples based on a location of the external tank 120, such as based on an amount of free space in a desired installation location on the aircraft.

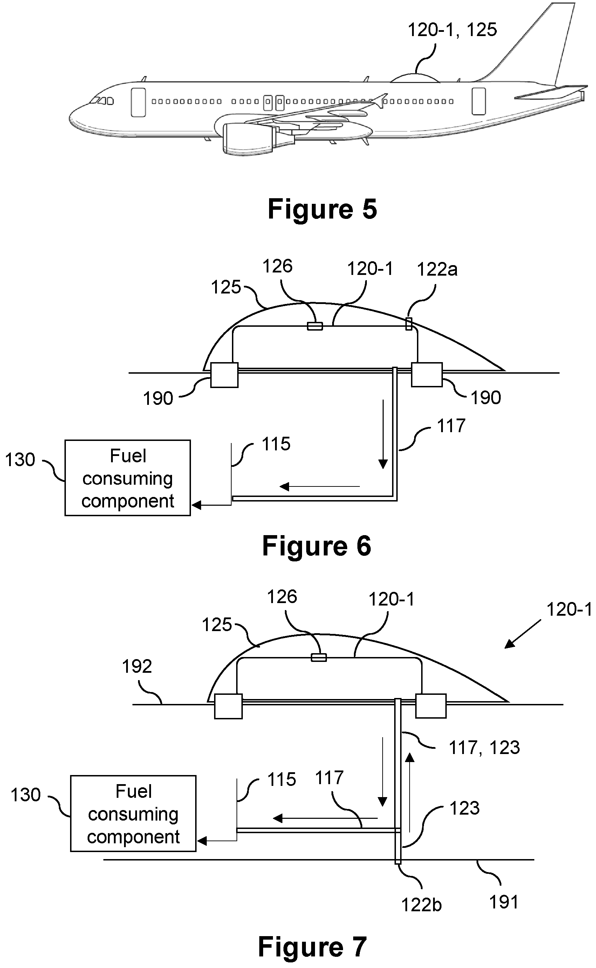

In the example of Figure 2, the external tank 120-1 is mounted to a centreline of the fuselage of the aircraft, in particular being mounted to an upper portion of the fuselage in an aftward position. The physical arrangement of the external tank 120-1 is described in more detail in view of Figures 5-7, according to a set of examples. This position, on a centreline of the fuselage of the aircraft, is frequently unutilised on existing aircraft, or at least comprises components with relatively small spatial footprints and as such can accommodate an external tank 120. Furthermore, the contents of the external tank 120-1 is arranged symmetrically about the centreline which can mitigate any impact on handling of the aircraft, by addressing issues with lateral imbalance.

The feed line 117 comprises a fluid conduit. In some examples, the feed line 117 may convey fuel, and may comprise a fuel conduit. The feed line 117 extends from the position of the external tank 120-1, which in this example is located at the upper portion of the fuselage, to the injection position 119. The injection position 119 is a point along the fuel line 115, between the internal fuel tank 110 and the fuel-consuming component 130, at which the feed line is fluidically connected to the fuel line 115 (or, in examples without a feed line 117, where the external tank 120 is fluidically connected to the fuel line 115). In this example, the injection position 119 is in the wing, towards a root end of the wing. Again, generally speaking, the feed line 117 and injection position 119 may take upon varied configurations across examples, and the present disclosure is not limited to any particular arrangement, although several particular arrangements are described in further detail hereafter.

A piping manifold is provided at the injection position 119. The piping manifold controls flow from the internal fuel tank 110 and the external tank 120 to the downstream fuel line which runs to the fuel-consuming component 130. The piping manifold comprises a number of valves operable to control the respective quantities of fluid flowing downstream to the fuel-consuming component. This can involve ceasing flow from a given tank, or permitting respective flows from each tank according to a predetermined ratio, for example. These valves are operable responsive to control signals issued by the controller 140. In other examples, control offered by the piping manifold is achieved in e.g. a distributed manner, wherein a respective valve of each of the internal fuel tank 110 and external tank 120 is operable to determine respective contribution of fluid to the fuel line, for example.

The fuel-consuming component 130 is, in this example, an engine of the aircraft 1000. The fuel-consuming component 130 consumes fuel provided through the fuel line 115, such as from the internal fuel tank 110 or from the external tank 120 (or a blend thereof). In other examples, the fuel-consuming component may be an auxiliary power unit of the aircraft 1000.

The controller 140 is for selectively releasing the contents of the external tank 120 (i.e. aircraft fuel additive, or a blend of aircraft fuel additive with aircraft fuel) into the fuel line 115. The controller 140 should therefore be understood to correspond to one or more processing devices which interface with one or more flow-control means (not pictured) in order to modulate flow from the external tank 120. This may be by e.g. issuing commands to switch a valve in the external tank 120 itself, switching a valve downstream of the external tank 120, or similar. Such commands may be responsive to signals such as a command sent by a user to begin using the contents of the external tank 120, for example. A variety of configurations for the controller 140 are possible and the present disclosure is not limited to any particular arrangement.

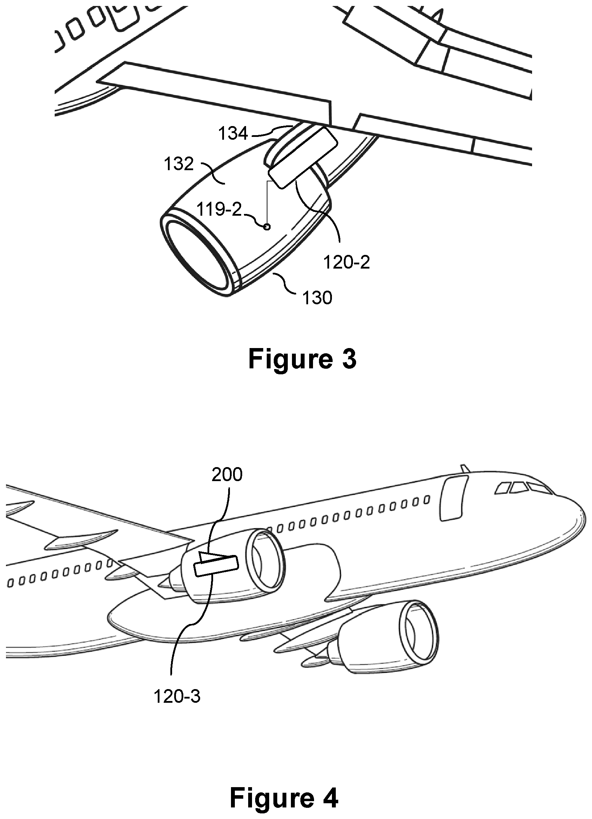

Various aspects of the external tank 120 and associated connective lines (such as the feed line 117) are now discussed in view of Figures 3-9.

Figure 3 illustrates a second example of an external tank 120-2. In this example, the external tank 120-2 is disposed within an engine nacelle 134, which is the outer casing or housing surrounding the aircraft's 1000 engine 130. This places the external tank 120-2 in close proximity to the fuel-consuming component to which the external tank 120-2 will provide fuel additives. In particular, the external tank 120 is positioned at a junction between the engine 130 and a pylon 134 connecting the engine 130 to the aircraft wing, on an upper portion of the engine nacelle 134. This is typically unutilised space which is suitable for hosting an external tank 120. In this example, the external tank 120-2 is less than 10 litres in volume, for example being 5 litres in volume, which means it has a relatively small spatial footprint and so has minimal impact on aerodynamic properties of the aircraft. It is for storing undiluted fuel additive which can then be provided at a 1% dosing ratio to the fuel line, which permits it to provide fuel additive for approximately 500 litres of fuel provided to the fuel-consuming component, which can be enough to perform typical ground operations, ground taxi, take-off and an initial climb from an airport.

Figure 3 also illustrates a second example of an injection position 119-2. The injection position 119-2 is at the high-pressure fuel pump of the engine, substantially downstream from the fuel tank 110. It is noted that such an injection position 119-2 could be used regardless of where the external tank 120 is arranged, but is particularly useful in cases where the external tank 120 is disposed within the engine nacelle 134 to minimise time taken for contents of the external tank 120 to be provided to the engine 130.

Figure 4 illustrates a third example of an external tank 120-3. The external tank 120-3 is also disposed within the engine nacelle, but on a side portion of the engine nacelle. The external tank 120-3 may be positioned on a lower portion of the side of the engine nacelle to avoid interfering with thrust reversers, for example. This relatively low position, on a side portion of the engine nacelle, allows the external tank 120-3 to be straightforwardly accessed, for example for maintenance or refuelling purposes.

Figure 3 also illustrates that other devices may be mounted to, or in the vicinity of, the external tank 120. In this example, a strake 200 is mounted to the external tank 120-3. Other devices such as oil heat exchanger, pitot tubes, antenna, oil top-up hardware, or lighting may alternatively or additionally be provided. The provision of an external tank 120 may create more space for such devices to be attached, space which was not otherwise present absent the external tank 120. Of course, the strake 200 is merely an example of a further device which may cohabit the space occupied by the external tank 120-3, and generally a further device may be provided to other arrangements of the external tank 120-3, and not limited to the one illustrated by Figure 4.

Figures 5-7 illustrate further aspects of how the external tank 120 may be arranged. Figure 5 illustrates that the external tank 120-1 may be housed within a fairing 125. The fairing 125 is conformal in that it smoothly integrates into the external profile of the aircraft fuselage. A fairing 125 may be provided for any particular location of the external tank 120. In some examples, the fairing may be integrally formed with the external tank 120 whereas in others the fairing may be a distinct structure from the external tank 120.

Figure 6 illustrates a schematic cut-through of the external tank 120-1 and fuselage of the aircraft 1000, from a side-on perspective (in that the aircraft extends left-to-right in the view of Figures 6 and 7, similar to the perspective of Figure 5), and illustrates a number of further elements which may be provided.

The external tank 120-1 is mounted to hardpoints 190 of the fuselage frame. More generally, the external tank 120-1 may be mounted to hardpoints of the aircraft to ensure the external tank 120-1 is securely fastened to the aircraft and to help distribute load through the aircraft frame.

The external tank 120-1 can be further equipped with a bidirectional valve 126 to allow over-pressure protection or prevent air-lock of the external tank 120-1. In other examples, a traditional air-breathing system may be provided.

A refill port 122a is provided to facilitate refilling of the external tank 120-1, and in particular can allow refilling of the external tank 120-1 independently from refuelling of the fuel tank 110. In the example of Figure 6, the refill port 122a extends through the fairing 125 to allow for refilling of the external tank 120-1 at a position proximate to the external tank 120-1. Figure 7 illustrates an alternative arrangement, wherein a refill line 123 extends from the external tank 120-1, located on a topside 192 of the aircraft 1000, to a refill port 122b in an underside 191 of the aircraft 1000. The external tank 120-1 can thereby be refilled by a straightforwardly accessible refill port 122b located on an underside of the aircraft 1000. Advantageously, in the example of Figure 7, the feed line 117 and refill line 123 share a portion of pipework. Switchable valves, for example, can allow a first mode in which the shared portion of pipework routes fluid from the refill port 122b into the external tank 120-1, and a second mode in which fluid from the external tank 120-1 is routed to the fuel line 115 and thereafter to the fuel-consuming component 130.

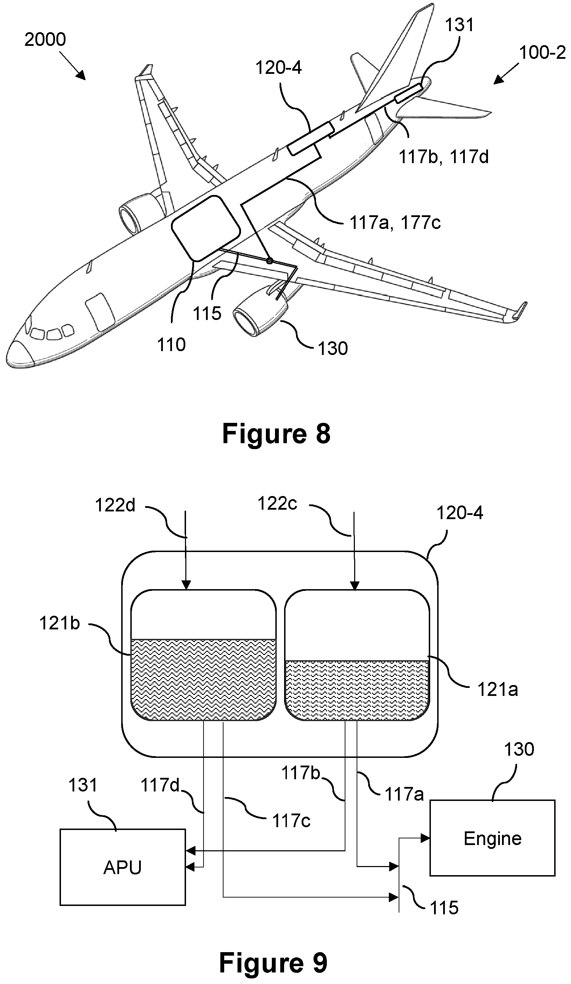

Figures 8 and 9 illustrate yet further features of the present disclosure, according to a second example of an aircraft fuel system 100-2 of an aircraft 2000.

The second example of the aircraft fuel system 100-2 differs from the first example in that the aircraft fuel system 100-2 comprises a second power-consuming component 131. In the example of Figure 8, the first power-consuming component is the engine 130, and the second power-consuming component is an auxiliary power unit (APU) 131 of the aircraft 2000. An external tank 120-4 according to a fourth example is operable to provide contents stored therewithin to both the engine 130 and the APU 131.

As depicted in Figure 9, the external tank 120-4 is apportioned into two neighbouring sub-storage tanks 121a, 121b which occupy a common volume. A first sub-storage tank 121a is connected via a first feed line 117a to the fuel line 115 and thereafter to the engine 130, and via a second feed line 117b to the APU 131. A second sub-storage tank 121b is similarly connected, via a third feed line 117c to the fuel line 115 and thereafter to the engine 130, and via a fourth feed line 117d to the APU 131. The first sub-storage tank 121a has a corresponding first refill port 122c, and the second sub-storage tank 121b has a corresponding second refill port 122d, allowing for their independent, and concurrent, refilling. The first and third feed line, serving the engine 130, may share an injection location or may have respective different injection locations, for example.

Various modes of operation are offered by such an arrangement. For example, each sub-storage tank 121a, 121b may be provided with different substances, and one or both of the engine 130 or APU 131 provided with either of the stored substances. Or, each sub-storage tank 121a, 121b may be provided with a same substance, with e.g. the first sub-storage tank 121a acting as a dedicated supply for the engine 130, and the second sub-storage tank 121b acting as a dedicated supply for the APU 131.

In some examples, the first sub-storage tank 121a is configured to store fuel additives for use by the engine 130 (undiluted or as a fuel-additive blend with conventional aircraft fuel) whilst the second sub-storage tank 121b is configured to store synthetic paraffinic fuel (SAF) with fuel additives, for example, for use by the APU 131. The second sub-storage tank can be used during airport operations on the ground, whereas the first sub-storage tank can be used during initial stages of flight, for example. In this way, the second tank is operable to serve two fuel-consuming components with different fuel types.

In other examples, further configurations are possible. The external tank 120-4 may comprise two (or more) sub-storage tanks, and provide different substances to the engine 130, but not serve a further fuel-consuming component, for example. The skilled person will appreciate that the example depicted in Figure 9 illustrates both multiple sub-storage tanks within the external tank, and also multiple feed lines to different fuel-consuming components, and that these concepts can be combined in various arrangements, without being limited to the example depicted in Figure 9.

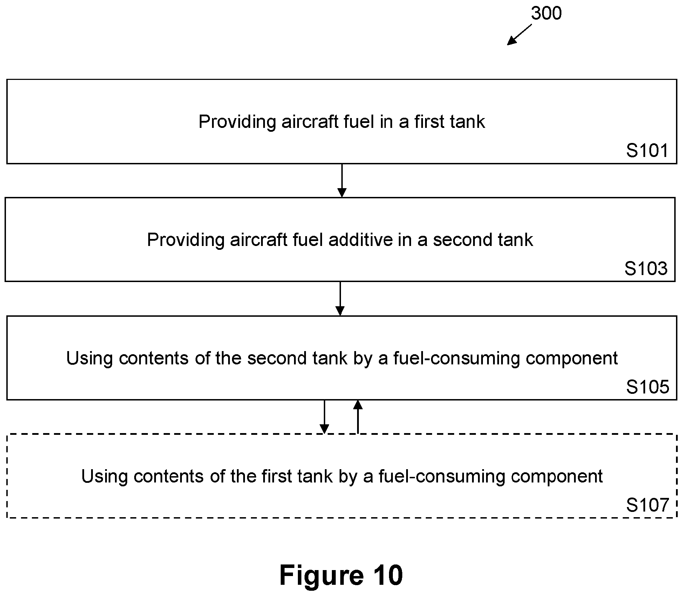

Figure 10 is a flowchart formed of steps S101, S103, S105 which are performed in a method 300 of operating an aircraft in accordance with the present disclosure. An option Step S107 is also included.

At Step S101, aircraft fuel is provided in a first tank, which corresponds to the internal aircraft fuel tank 110. This aircraft fuel may have been left over from previous operation of the aircraft, for example, and so providing aircraft fuel at the fuel tank encompasses the aircraft fuel already being stored by the fuel tank. In some examples, Step S101 involves receiving aircraft fuel by a fuel tank filling procedure in which aircraft fuel is provided to the fuel tank through a refill port of the fuel tank. This can correspond to a conventional aircraft refuelling process.

At Step S103, aircraft fuel additive is provided to a second tank, which corresponds to the external tank 120. This aircraft fuel additive may have been left over from previous operation of the aircraft, for example, and so providing aircraft fuel additive to the external tank 120 encompasses the aircraft fuel additive already being stored by the external fuel tank 120. In some examples, Step S103 involves receiving aircraft fuel additive by a structure filling procedure in which aircraft fuel additive is provided to the structure through a fluid refill port of the structure. The aircraft fuel additive provided to the external tank 120 may be provided in undiluted form, for example, or in a blended form wherein aircraft fuel blended with aircraft fuel additive is provided

At Step S105, contents of the second tank, i.e. the external tank 120, is used by a fuel-consuming component, such as an engine or auxiliary power unit of the aircraft. Step S105 can be performed on the basis of a selective release of the contents of the second tank to the fuel line of the fuel system. For example, where the external tank 120 stores undiluted fuel additive, Step S105 can involve selectively releasing the undiluted fuel additive into the fuel line, whereupon it mixes with aircraft fuel from the internal fuel tank and is provided to the fuel-consuming component 130 as an additive-fuel blend. Where the external tank 120 stores an additive-fuel blend, then Step S105 can involve releasing the additive-fuel blend into the fuel line, whereupon it is consumed by the fuel-consuming component 130. This can further involve terminating flow from the internal aircraft fuel tank 110 such that the fuel-consuming component 130 consumes substantially exclusively contents of the external tank 120, wherein substantially exclusively means with the exception of any remaining fluids from the internal aircraft fuel tank 110 which may still be present in the fuel line at the point that the flow is terminated, for example. The selective release of contents from the external tank may be during ground operations, for example. By using the contents of the external tank 120, which contains a fuel-additive blend for example, and not using the contents of the aircraft fuel tank 110 which contains conventional aircraft fuel, an amount of unwanted emissions can be reduced, for example.

At Step S107, an optional step which can be performed before and/or after Step S105, the contents of the first tank (e.g. conventional aircraft fuel) can be used by the fuel-consuming component 130. Step S105 may be selectively initiated one or more times during otherwise continual performance of Step S107, for example. Similarly, Step S107 may be selectively initiated one or more times during otherwise continual performance of Step S105, for example.

The above embodiments are to be understood as illustrative examples of the invention. Further embodiments of the invention are envisaged.

For example, two or more external tanks may be provided, each feeding into the fuel line at respective or a shared injection point. This can allow, for example, multiple external tanks to store a volume of fuel, wherein the size of each of the multiple external tanks may be relatively limited. The multiple external tanks may be distributed at different positions across the aircraft, and each tank may store a respective different substance. For example, a first external tank may be provided on the engine nacelle and store undiluted additive; a second external tank may be provided on an underbelly of the fuselage and store a fuel-additive blend, both feeding into a common fuel line, for example.

In some examples, an external tank feeds into multiple fuel lines to multiple fuel-consuming components. In some examples, however, the external tank feeds into just a single fuel-consuming component, such as a single engine dedicated for ground operations (such as single-engine taxiing). For example, a single engine may host an external tank comprising undiluted additive, in accordance with the example of Figures 3 or 4, for example. During ground operations, therefore, the additive within the external tank is provided to the single engine to reduce unwanted emissions during said ground operations.

It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims. It is to be noted that the term "or" as used herein is to be interpreted to mean "and/or", unless expressly stated otherwise.

## Claims

1. An aircraft fuel system, comprising
a first tank disposed within an interior of an aircraft, the first tank fluidically connected to a fuel-consuming component by a fuel line, and
a second tank located on an exterior of the aircraft, the second tank fluidically connected to the fuel line at an injection position along the fuel line between the first tank and the fuel-consuming component;
the aircraft fuel system configured such that contents of the second tank is selectively releasable into the fuel line.

2. The aircraft fuel system according to claim 1, wherein the second tank is connected to the fuel line by a feed line, the feed line extending from the second tank and joining the fuel line at the injection position along the fuel line between the first tank and the fuel-consuming component.

3. The aircraft fuel system according to claim 1 or 2, wherein the aircraft fuel system comprises a first refill port for the first tank, and a second refill port, separate from the first refill port, for the second tank; optionally wherein the aircraft fuel system comprises a refuel line from the second refill port to the second tank.

4. The aircraft fuel system according to claim 3 when the aircraft fuel system comprises the refuel line from the second refill port to the second tank and when dependent upon claim 2, wherein at least a portion of the refuel line forms at least a portion of the feed line.

5. The aircraft fuel system according to claim 3 or 4, wherein the second refill port is located in a housing of the second tank; and/or wherein the second refill port is located on an underside of the aircraft.

6. The aircraft fuel system according to any one of the preceding claims, wherein the fuel-consuming component is an engine of the aircraft and the second tank is disposed at least partially within an engine nacelle of the aircraft;
optionally wherein:
(i) a volume of the second tank is less than 100 litres;
and/or
(ii) wherein the second tank is disposed:
on an upper portion of the engine nacelle, proximate a supporting pylon of the engine; or
on a side portion of the engine nacelle, proximate an engine fuel distribution system.

7. The aircraft fuel system according to any preceding claim, wherein:
(i) the second tank is connected to a further fuel-consuming component; optionally wherein the further fuel-consuming component is an auxiliary power unit of the aircraft; and/or
(ii) the second tank is apportioned into a first sub-storage tank and a second sub-storage tank.

8. The aircraft fuel system according to claim 7 when the second tank is connected to the further fuel-consuming component and the second tank is apportioned into the first sub-storage tank and the second sub-storage tank, wherein the first sub-storage tank is fluidically connected to the fuel line to the fuel-consuming component, and the second sub-storage tank is fluidically connected to the further fuel-consuming component.

9. The aircraft fuel system according to claim 7 when the second tank is apportioned into the first sub-storage tank and the second sub-storage tank, or according to claim 8, wherein the first sub-storage tank is fluidically connected to the fuel line to the fuel-consuming component, and the second sub-storage tank is fluidically connected to a further fuel line to the fuel-consuming component.

10. The aircraft fuel system according to any one of the preceding claims, wherein:
(i) the second tank is housed in a fairing, optionally wherein the fairing hosts a functional device such as any of: a strake, oil heat exchanger, pitot tube, antenna, oil top-up hardware, or lighting unit; and/or
(ii) the aircraft fuel system comprises a control unit operable to control release of the contents of the second tank into the fuel line; and/or
(iii) wherein the fuel-consuming component is an engine of the aircraft and the injection position is within a high-pressure shut-off or high-pressure fuel pump of the engine; and/or
(iv) wherein the second tank is disposed on the fuselage of the aircraft, optionally wherein:
(a) a volume of the second tank is between 100 and 1000 litres; and/or
(b) the second tank is positioned along a centreline of an upper portion of the fuselage.

11. An aircraft comprising the aircraft fuel system according to any one of claims 1 to 10.

12. The aircraft according to claim 11, wherein the first tank is storing aircraft fuel and the second tank is storing aircraft fuel additive; and optionally
wherein the second tank is storing undiluted aircraft fuel additive.

13. The aircraft according to claim 11 or 12 when dependent upon claim 7 when the second tank is apportioned into the first sub-storage tank and the second sub-storage tank, or when dependent upon claim 8 or 9, wherein the first sub-storage tank is storing aircraft fuel additive and the second sub-storage tank is storing a different substance to the first sub-storage tank, optionally
wherein, when dependent upon claim 8, the second sub-storage tank is storing a sustainable aviation fuel.

14. A method of operating an aircraft, comprising:
providing, in a first tank, aircraft fuel, the first tank within an interior of the aircraft;
providing, in a second tank, aircraft fuel additive, the second tank located on an exterior of the aircraft, contents of the second tank being different to contents of the first tank; and
using contents of the second tank by a fuel-consuming component of the aircraft.

15. The method of claim 14, wherein:
providing, in the first tank, aircraft fuel, comprises filling the first tank with aircraft fuel via a first refill port associated with the first tank; and
providing, in the second tank, aircraft fuel additive, comprises filling the second tank with aircraft fuel additive via a second refill port associated with the second tank, the second refill port separate from the first refill port.
